# EUROPEAN PATENT SPECIFICATION

(11) **EP 3 132 126 B1**
(45) Date of publication and mention of the grant of the patent: **29.08.2018**
(21) Application number: 14723094.0
(22) Date of filing: 17.04.2014
(51) Int. Cl.: F01N 3/20, F01N 3/22, F01N 3/36

(54) **SYSTEM AND METHOD OF CATALYST FROST PROTECTION OF SELECTIVE CATALYTIC REDUCTION**
SYSTEM UND VERFAHREN ZUM KATALYSATORFROSTSCHUTZ DER SELEKTIVEN KATALYTISCHEN REDUKTION
SYSTÈME ET PROCÉDÉ DE PROTECTION CONTRE LE GEL D'UN CATALYSEUR DE RÉDUCTION CATALYTIQUE SÉLECTIVE

(43) Date of publication of application: 22.02.2017
(73) Proprietor: Wärtsilä Finland Oy, 65380 Vaasa (FI)
(72) Inventor: WIDJESKOG, Klaus, FI-65100 Vaasa (FI); SOIKKELI, Niko, FI-65100 Vaasa (FI); VÄSTI, Veli-Pekka, FI-65100 Vaasa (FI)
(74) Representative: Berggren Oy, Helsinki & Oulu
(86) International application number: PCT/FI2014/050280
(87) International publication number: WO 2015/158948

(56) References cited:
- EP-A1- 2 320 044
- EP-A2- 0 971 102
- DE-A1-102011 010 952
- US-A1- 2004 098 976

## Description

The invention concerns selective catalytic reduction and in particular catalyst frost protection of selective catalytic reduction of engines. The present invention relates to a system of catalyst frost protection of selective catalytic reduction of engines according to the preamble of independent system claim and to a method of catalyst frost protection of selective catalytic reduction according to the preamble of independent method claim.

In publication JP5269387A is disclosed metallic catalyst carriers provided in a shell, which catalyst carriers are heated and allowed to act as a heater in an exhaust gas purifying catalytic converter, which is placed in the exhaust passage of an internal combustion engine. The positive and negative electrode members connecting the carriers are allowed to pierce the insulated metallic shell wall, and the electrode members are electrically connected in parallel through radiating plates in order to improve the fail-safe function.

In publication JP4171214A is disclosed a metal carrier consisting of a linear main metal plate and several corrugated spacers which are combined therewith to form a number of flow passages. Insulation is made between the main metal plate and the corrugated spacers by insulating ceramics layers. In addition the metal carrier has an insulating mat wound around the outer periphery is housed in a casing.

In publication WO2011114453A1 is disclosed an exhaust emission control device for internal combustion engines, which is provided with an electrically heated catalyst that is equipped with a catalyst support and a support holding unit provided around the periphery of the catalyst support, which has electrically insulating properties.

In patent publication US5884475 is disclosed a method and a device for introducing liquid into an exhaust-gas purification system to avoid frost damage to sections of the system during shutdown times and permitting operation of the system at temperatures below the freezing point of the reducing agent solution. The method and device include a thermally insulated reservoir for the reducing agent liquid and a liquid supply line which is connected thereto and terminating in an outlet opening for the liquid. The reservoir and the liquid supply line can be heated. Furthermore, a heater is provided for liquefying a starting volume which is small as compared with the volume of the reservoir. The liquid supply line may also have a back-flush valve to which a gas that is under pressure can be applied. The supply line can consequently be blown free.

In patent publication US5522218 is disclosed a high temperature nitrogen oxides reduction system for exhaust from lean burn engines from a combustion source flowing through an exhaust passageway. When in operation, the temperature of the exhaust is periodically measured and the operating condition of the combustion source is periodically determined. An injection amount is periodically computed based upon predetermined optimal amounts, the measured temperature of the exhaust, and the determined operating condition of the combustion source. Finally, the injection amount of nitrogen oxides reducing fluid is periodically injected into the exhaust passageway upstream from the catalyst.

In patent application publication EP0971102 is disclosed a NOx reduction system for combustion exhaust gas, comprising a NOx catalytic converter mounted in an exhaust passage of an engine and operable to reduce NOx in the exhaust gas containing excess oxygen, an air supply device comprising an air supply passage that communicates at one end thereof with a portion of the exhaust passage located upstream of said NOx catalytic converter, and is connected at the other end thereof to an air supply source, a fuel supply device disposed in the air supply passage and operable to inject fuel into the air supplied from the air supply source and a heating device that heats the fuel added to the air to 350 - 450 °C so as to partially oxidize the fuel.

In patent application publication US2004/098976 is disclosed a reductant delivery system, comprising an evaporator unit including at least a heating device, a mixing device having at least one inlet and at least one outlet coupled to said evaporator unit and a controller for introducing reductant and air into said mixing device through said inlet, injecting a mixture of said reductant and said air through said outlet into said evaporator unit, said controller adjusting a temperature of said heating device to evaporate said mixture.

In patent application publication EP2320044 is disclosed an SCR system of a vessel for discharging exhaust gas from at exhaust gas source in the vessel to an outside after performing purification of the exhaust gas, comprising an SCR reactor connected at a leading end thereof to the exhaust gas source and comprising a catalyst activated by the exhaust gas introduced into the SCR reactor, a reducing agent supply line supplying NH3 or urea into the SCR reactor and a bypass system forcing the exhaust gas discharged from the exhaust gas source to bypass the SCR reactor.

In patent application publication DE102011010952 is disclosed a method for protection of fluid systems or -components, particularly of selective catalytic reduction systems of internal combustion engines, against freezing pressure, involves introducing specified air quantity into fluid system.

Selective catalytic reduction (SCR) is a process of converting nitrogen oxides by means of a catalyst into diatomic nitrogen and water. In selective catalytic reduction systems into the flow of exhaust gas a reductant in form of a gas is added and adsorbed onto a catalyst. One of typical reductants is urea. Selective catalytic reduction systems are used for example in large utility boilers, industrial boilers, solid waste boilers and in engines of large ships, locomotives, gas turbines.

SCR systems are becoming more common on ships as result of stringent emission regulations. For SCR proper function it is known that the temperature need to be high enough in order the SCR system to function properly but less known is the problem that there are also a temperature limitations for the time that engine is not running. It typically is defined from the catalyst element supplier that the catalyst elements of ceramic porous material should be stored in dry conditions and above 0 °C when engine is not running. Condense water and humid environment can result water entering into pores of the ceramic material of the catalyst elements or for example into the ceramic catalyst honeycomb elements and if the temperature is below 0 °C the water will freeze, which may lead to malfunctioning of the system and even the catalyst elements of the system may break as the moisture freezes. Condense water and humid environment can also cause problems when metallic catalyst elements are used, for example foiled metallic material of the catalyst elements may crack or corrode due to moisture and freezing of it. The cold and humid environment also increases activation time of the catalyst elements.

An object of the present invention is to provide an improved system and method of catalyst frost protection of selective catalytic reduction in which the problems described above, in particular relating to water freezing and to moisture in catalyst elements of the SCR system, are eliminated or at least minimized.

An object of the present invention is to provide an improved system and method of catalyst frost protection of selective catalytic reduction in which temperature does not limit the use of the SCR-system when the engine is not running.

On some installations, such as large ships or vessels or corresponding off-shore rigs or power plants, there is often limited or no space with dry conditions and temperature above 0 °C. Therefore SCR reactor is placed in humid and cold environment where it is susceptible to temperature changes, for example the SCR reactor can be placed outside in cold air with poor/no insulated external exhaust funnel, since insulating the whole exhaust funnel area and the heating of the whole volume is expensive. Many types of installations, such as large ships or vessels or off-shore rigs or power plants, for example icebreakers or fishing vessels, operate in artic conditions even at temperatures -40 °C.

One particular object of the invention is to create a system and method of catalyst frost protection of selective catalytic reduction which is especially applicable in artic conditions.

In order to achieve the above objects and those that will come apparent later the system according to the invention is characterized by the features of the characterizing part of independent system claim. The method according to the invention in turn is characterized by the features of the characterizing part of independent method claim. Advantageous embodiments and features are defined in dependent claims.

The system of catalyst frost protection of selective catalytic reduction comprises an engine, an exhaust gas duct leading from the engine a selective catalytic reduction (SCR) reactor comprising catalyst elements is located on the path of the exhaust gas duct, wherein the system comprises a heating system of the selective catalytic reduction system (SCR), which comprises a compressed air supply connected to the exhaust gas duct via an air channel for feeding the compressed air via the exhaust gas duct to the SCR reactor and at least one heater for keeping warm and/or warming catalyst elements of the SCR reactor. Advantageously the system of the catalyst frost protection of selective catalytic reduction is combined with the reductant injector system in frost protection operation the system is used without the reductant injection as the engine is not running for keeping warm and/or warming the catalyst elements of the SCR re-actor.

According to an advantageous feature of the invention the SCR reactor and at least part of the exhaust gas duct are located in environment susceptible to humidity and to ambient temperature.

According to an advantageous embodiment of the invention at least one heater is located on the path of the air flow upstream of at least one catalyst elements of the SCR reactor for heating the air flow. The heater located before a heater can also function as a mixer.

According to an advantageous feature of the invention the system comprises a connection point of the air channel of the compressed air supply to the exhaust gas duct located upstream of the catalyst elements of the SCR reactor.

According to an advantageous feature of the invention the system further comprises a reductant injector for feeding compressed air from the compressed air supply to the exhaust gas duct.

According to an advantageous feature of the invention the compressed air is advantageously in pressure 4 - 8 bar when fed to the channel when reductant is injected and the pressure of the air flow for the heater when fed to the channel is 0,5 - 4 bar. There can also be at least two compressed air supplies, one of which is for the reductant injector and one is for the air flow for the heater, and in this case the air supply for the reductant injection has the higher pressure range and the air supply for the heater has the lower pressure range. According to an advantageous feature of the invention compressed air supply has means for controlling the compressed air feed to continuous feeding and/or to feeding at selected intervals during the engine shutdown thus providing sequential operation.

According to an advantageous feature of the invention the heater has a control for automatically switching the heater on by feedback from at least one temperature measurement sensor arranged in the SCR reactor. The system may also comprise temperature measurement sensor for providing information of environment or the system may receive information from a weather forecast system and the control may automatically switch the heater on when the weather forecast prognoses temperatures that may be harmful to the catalyst elements.

According to an advantageous feature of the invention the heating system has at least two heaters, which heaters are selectively activable. Of these heaters at least two are for operation or of these heaters at least one of which heaters is for operation and at least one of the heaters for back-up.

According to an advantageous embodiment of the invention the heater comprises at least one heating cable located at the SCR reactor surface structure or located on at least one end surface of a catalyst element in flow direction of the air.

According to an advantageous feature of the invention the SCR reactor is insulated by insulation.

According to an advantageous feature of the invention each end of the SCR reactor in flow direction of the air is provided with a closure element in order maintain heat in the SCR reactor when the heating system has been stopped.

According to an advantageous feature of the invention the system further comprises means for moisture removal and the moisture is advantageously disposed either to engine scrubber or other emission reduction device for utilization. The moisture removal is performed, when engine is not running.

Advantageously in the system according to the invention some components of some embodiments, which are susceptible to cold environment such as soot-blowing equipment, reductant piping and injection equipment can be equipped with heating. Heating could be arranged through location selection, for example reductant line can be placed inside reactor insulation and soot-blowing valves can be placed in suitable place in accordance with the use-temperature range.

According to the invention the method of catalyst frost protection of selective catalytic reduction of engine, in which method when the engine is not running catalyst elements of a selective catalytic reduction reactor are heated by heater and kept in temperatures above 0 °C, wherein the catalyst elements of a selective catalytic reduction (SCR) reactor are heated by heater and a compressed air is provided to the SCR reactor from a compressed air supply to ensure sufficient heat convection.

According to an advantageous feature of the invention in the method when engine is stopped for a period and due to low ambient air temperature the catalyst elements would cool down close to 0°C, the catalyst elements are heated by an electrical heater and heat convection thru the catalyst elements is ensured by pushing air from a compressed air supply by an urea injector.

In the following the invention is described in more detail by reference to the accompanying drawing in which
Fig. 1 shows schematically a simplified example of the operation principle of the heating system of the selective catalytic reduction system according to an advantageous example of the invention,
Fig. 2 shows schematically a simplified example of a SCR reactor according to an advantageous example of the invention and
Figs. 3 - 6 show schematically simplified examples of a SCR reactor according to advantageous examples of the invention.

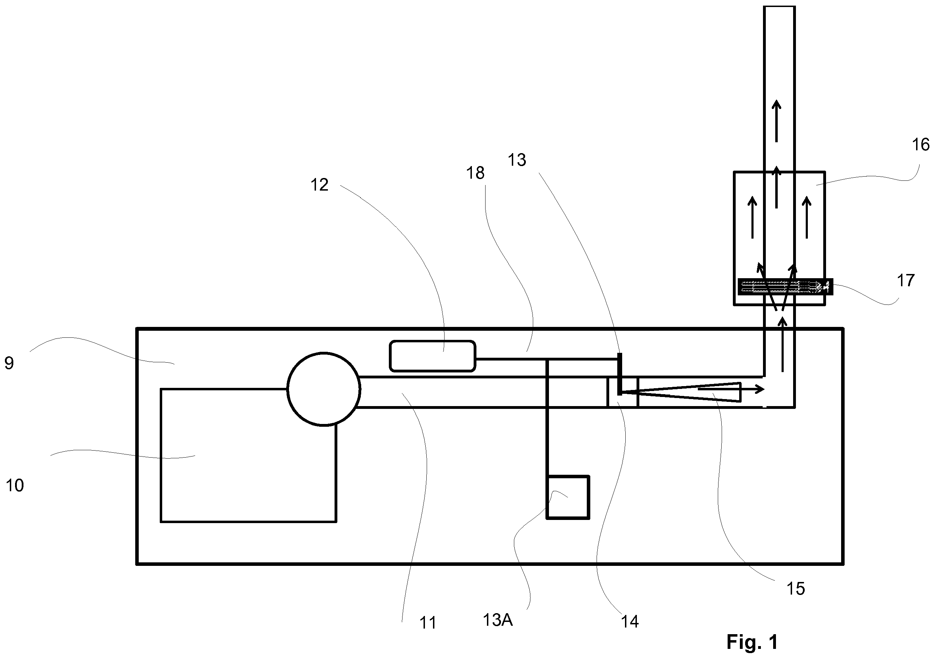

During the course of the following description of figures 1 - 6 like numbers and signs will be used to identify like elements, parts and part components unless otherwise mentioned. In the following the examples are described mainly by reference to a SCR system of an engine of a large ship or an off-shore rigs or power plant or a power plant in view of simplifying the disclosure but it should be noted that instead of this example any type of a SCR system for cold and humid conditions can have similar features and properties in accordance with the invention.

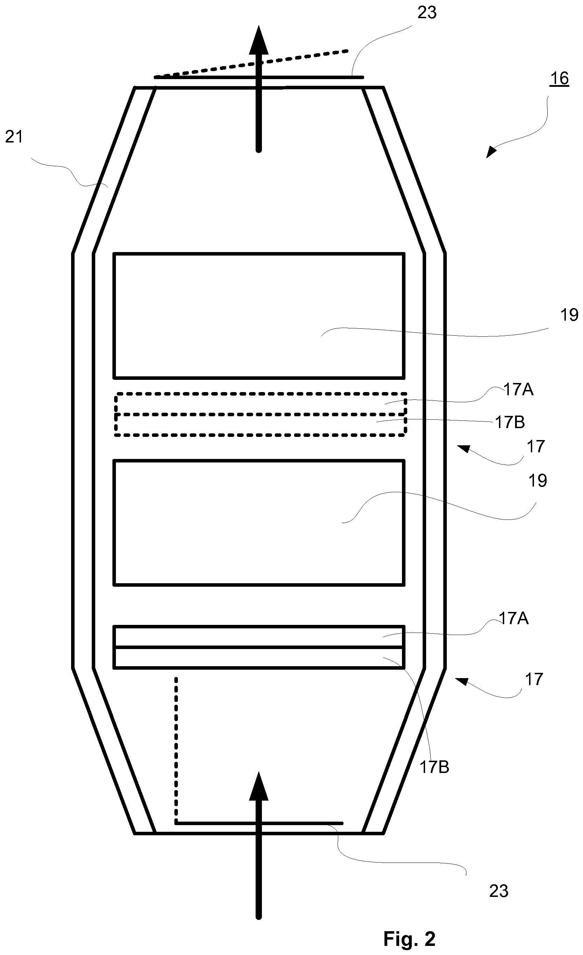

In figure 1 is shown a simplified example of the operation principle of the heating system of the selective catalytic reduction system according to an advantageous example of the invention. In this example an engine 10 is located in an engine room 9. The selective catalytic reactor 16 is located in environment susceptible to humidity and temperature changes, for example outside, the engine room 9 in environment susceptible to humidity and temperature changes, for example outside, of for example to arctic conditions. From the engine 10 exhaust gases are led to an exhaust gas duct 11 during running of the engine 10. When the engine 10 is running, the reductant is supplied to an air channel 18 from reductant supply 13A. When the engine is not running and the temperature decreases to near freezing temperatures of water into the exhaust gas duct 11 compressed air is led from a compressed air supply 12 via an air channel 18 connected to the exhaust channel at connection point 14 upstream of catalyst elements of the SCR reactor. Into the air channel 18 is connected an air assisted reductant, for example urea injector 13 by which during the engine shut down air only is fed in order to ensure sufficient heat convection. The compressed air is when fed to the channel 18 advantageously in pressure 4 - 8 bar, when the pressure supply is used for both reductant injection and the air flow for the heater. The pressure when the air is fed to the channel 18 is advantageously lower for the air flow of the heater, for example 0,5 - 4 bar. There can also be two different pressure supplies. The compressed air can be fed continuously during the time needed and/or at selected interval, which feeding is controlled by means for controlling the compressed air feed of the compressed air supply (12). The compressed air feed also helps in keeping the components of the system clean. The compressed air supply 12 can be for the SCR reactor only or a compressed air supply common to the ship or rig. The compressed air can be preheated for enhancing the warming effect or for decreasing the power of the heaters or in the ambient temperature; advantageously the compressed air supply 12 is located in warmed inside space and thus in temperatures above 0 °C. Instead of feeding the compressed air via the reductant injector 13 a separate compressed air channel can be used. In the figure 1 the air flow is denoted by arrows. The air flow enters to the SCR reactor 16, in which catalyst elements (fig. 2) of porous ceramic material and a heater 17, advantageously an electric heater 17 is located. The electric heater 17 warms the air flow and thus warm air flow warms catalyst elements (fig. 2) in the SCR reactor 16 and prevents the catalyst elements from freezing keeping them in warmed temperature above 0 °C. By the heating system it is ensured that the temperature of the catalyst elements is kept at least ≥ 0°C when the engine(s) is not running and thus the risk that moisture from ambient air condensates freezes and cracks the porous ceramic catalyst elements. Advantageously the heater 17 is automatically switched by a control (not shown) on with help of feedback from at least one temperature measurement sensor (not shown) arranged in the SCR reactor 16. The system may also comprise at least one temperature measurement sensor (not shown) for measuring the ambient temperature and at least one humidity measurement sensor (not shown) for providing humidity information to the control of the system.

Thus there is no limit for the engine 10 stop times and the engine 10 can remain stopped several days or even weeks independent from the environmental conditions. The heating system can be designed for required ambient air temperatures, e.g. for -25°C ambient air temperature.

The heating system has the electrical heater/-s 17 before the first layer of the catalyst elements. Advantageously the system has at least two heaters 17 one of which heaters is for the operation and one of the heaters for a back-up. The both heaters 17 can also be used for the operation in order to enhance the operation. The air is pushed from engine room 9 by reductant injector 13 in order to ensure sufficient heat convection from the heater 17. The SCR reactor 16 is advantageously insulated by thick, for example 200 mm, insulation in order to decrease the cooling of the reactor 16. The heater 17 is heated preferably only when the engine 10 is stopped and the temperature inside the reactor 16 drops below set point, for example below +5 °C.

As shown in the example of figure 1 the SCR reactor 16 is located in environment susceptible to humidity and temperature changes, for example outside, and at least part, possibly major part of the exhaust gas duct 11 is located in environment susceptible to humidity and temperature changes, for example outside. In an engine system there can be more than one SCR reactors 16 and each of them is equipped with an electrical heater 17. Advantageously additionally installed the reductant injector 13 and other SCR auxiliaries are installed inside.

As shown in the schematic example of figure 2 the SCR reactor 16 comprises two catalyst elements 19 and an electrical heater 17 and insulation 21. The air flow, indicated by arrows, flows through the successive, in flow direction, catalyst elements 19 and by the selective catalytic reaction occurs during which nitrogen oxides are converted by means of a catalyst in the catalyst elements 19 into diatomic nitrogen and water. In selective catalytic reduction systems into the flow of exhaust gas a reductant, for example urea in form of a gas is added and adsorbed onto a catalyst in order to meet the emission regulations. When the engine 10 (fig. 1) is running the catalyst elements 19 are heated by the exhaust gas, not by electrical heater 17, and the urea is injected with low sulphur LFO (light fuel oil) in temperature 290 - 450 °C. The SCR reactor 16 is insulated by thick, for example 200 mm, insulation 21 has an increased cool off period of the reactor 16. During running of the engine reactor 16 structures and catalyst elements 19 will maintain the heat and thus the temperature of the catalyst elements 19 is at required level. When engine 10 (fig. 1) is stopped for a longer period and due to low ambient air temperature the catalyst elements 19 would otherwise cool down close to 0°C, the electrical heater 17 is started and sufficient heat convection thru the catalyst elements 19 is ensured by pushing air from the compressed air supply 12 by urea injector 13 as shown in figure 1 and air which would normally be used for the atomization of the liquid urea in the selective catalytic reaction will be used for the heat convection (fig. 1). Advantageously the power of the heater elements is selected according to the requirements of each installation, for example 2 - 7 kW heater elements are used for the electrical heater 17. Advantageously the electrical heater 17 comprises two heater elements 17A, 17B one of which is used during the heating and one is for back up. When the engine 10 is running the heater 17 is mainly not in use but if desired it can also be used for pre-heating of the catalyst elements 19 during the start-up stage of the engine 10. Additionally each end of the SCR reactor 16 in flow direction of the air can be provided with a closure element 23, which is turnable between closed and open position indicated by dashed line, in order to maintain the heat in the SCR reactor 16 when the heating has been stopped. The closure element 23 can also be crated as an air curtain type of air blockage provided by hot or cold gas or steam or antifreeze additive spray. If needed a heater 17 can be located before each catalyst element 19 as shown by dashed lines in the figure 2.

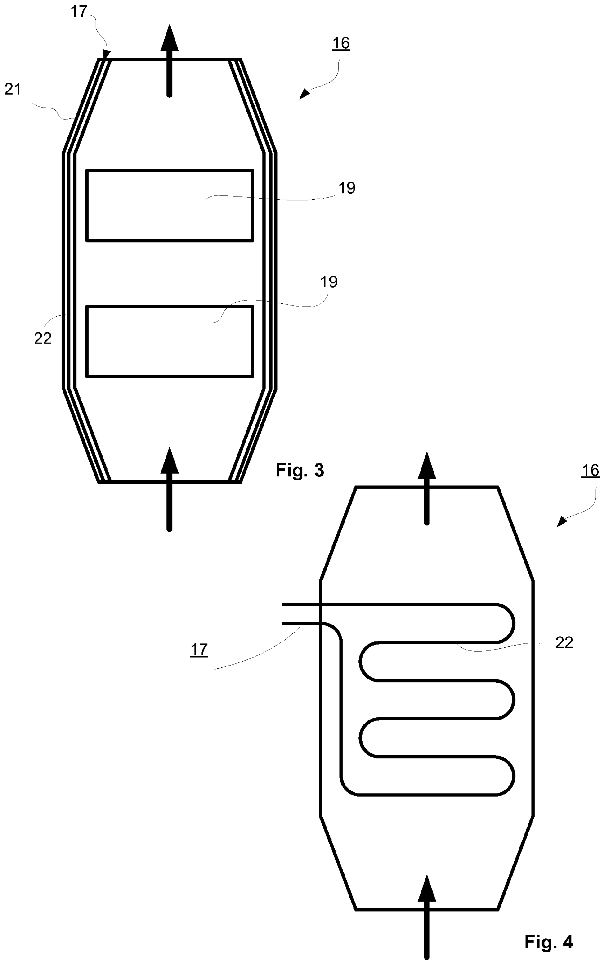

In the schematic example of figs. 3 - 4 the catalyst elements 19 of the SCR reactor 16 are kept warm i.e. above 0 °C during the shutdown times of the engine 10 (fig. 1) by a heater 17 that is formed of heating cable 22 located at the reactor surface structure, advantageously between the insulation 21 and the outer surface of the SCR reactor 16 or between the insulation and the inner surface of the SCR reactor 16. The heating cable 22 is arranged in a circulating manner vertically and or horizontally, known as such from other types of heating arrangements based on heating cables, such that inside of the reactor 16 is heated by the cable 22 and thus keeping the catalyst elements 19 above freezing point of water.

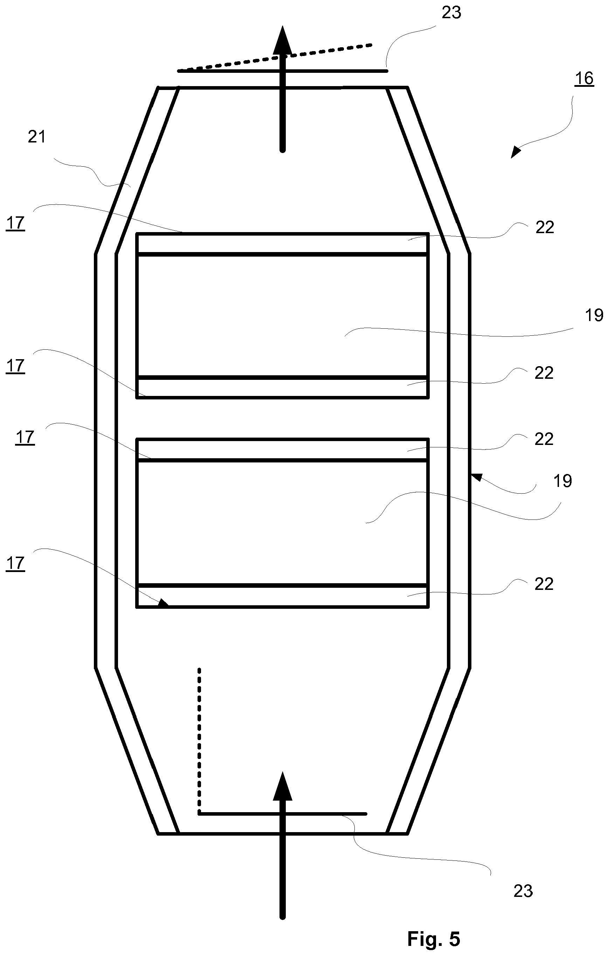

In the schematic example of fig. 5 the catalyst elements 19 of the SCR reactor 16 are kept warm i.e. above 0 °C during the shutdown times of the engine 10 (fig. 1) by a heater 17 that is formed of heating cable grids 22located at catalyst element 19 end surfaces in flow direction of the air.

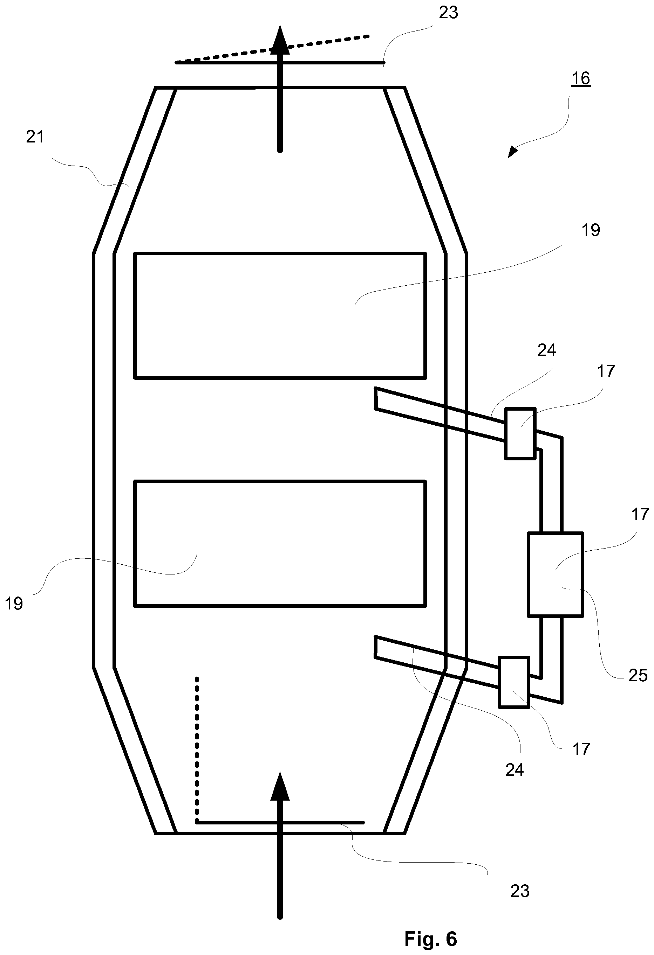

In the schematic example of fig. 6 the catalyst elements 19 of the SCR reactor 16 are kept warm i.e. above 0 °C during the shutdown times of the engine 10 (fig. 1) by a heater 17 that is formed in connection to air lines 24 that provide heated air to the catalyst elements 19 for example by soot-blowers. These air lines 24 are used for valve cooling when the engine 10 running. The air tank 25 with compressed air feed (not shown) provides the air flow created by blowers (not shown). The air flow is heated for example by heating elements 17 that heat the outer surfaces of the air lines 24 and/or by heating element located in the air tank 25. This example can be modified for example such that each air line has own air tank, which has a heater, for example a heating fan, a heating element or a burner. Above only some advantageous examples of the invention have been described to which the invention is not to be narrowly limited. It is clear to one skilled in the art that many modifications and variations are possible with in the invention as defined in the following claims.

### Reference signs used in the drawing

- 9: engine room
- 10: engine
- 11: exhaust gas duct
- 12: compressed air supply
- 13: air assisted reductant injector
- 13A: reductant supply
- 14: connection point
- 15: spray
- 16: SCR reactor
- 17: heater
- 18: air channel
- 19: catalyst element
- 21: insulation
- 22: heating cable
- 23: closure element
- 24: air lines
- 25: air tank

## Claims

1. System of catalyst frost protection of selective catalytic reduction, which system comprises an engine (10), an exhaust gas duct (11) leading from the engine (10) to outside, a selective catalytic reduction (SCR) reactor (16) comprising catalyst elements (19) is located on the path of the exhaust gas duct (11), a heating system of the selective catalytic reduction system (SCR), which comprises a compressed air supply (12, 24) connected to the exhaust gas duct (11) via an air channel (18) for feeding the compressed air via the exhaust gas duct (11) to the SCR reactor (16) and at least one heater (17) for keeping warm and/or warming catalyst elements (19) of the SCR reactor (16), **characterized in that** the system comprises control for activating the heater (17) heating the selective catalytic reduction reactor (16) and for also activating the compressed air supply (12, 24) to ensure sufficient heat convection for keeping the selective catalytic reduction reactor (16) in temperatures above 0 °C in case of ambient temperature being below 0 °C, when the engine (10) is not running.

2. System according to claim 1, **characterized in that** at least one heater (17) is located on the path of the air flow upstream of at least one of the catalyst elements of the SCR reactor (16) for heating the air flow.

3. System according to claim 1 or 2, **characterized in that** the system comprises a connection point (14) of the air channel (18) of the compressed air supply (12) to the exhaust gas duct (11) located upstream of the catalyst elements (19) of the SCR reactor (16).

4. System according to any of claims 1 - 3, **characterized in that** the system further comprises a reductant injector (13) for feeding compressed air from the compressed air supply (12) to the exhaust gas duct (11).

5. System according to any of claims 1 - 4, **characterized in that** the pressure of the air flow for the heater when fed to the channel is 0,5 - 4 bar.

6. System according to any of claims 1 - 5, **characterized in that** the compressed air supply (12) has means for controlling the compressed air feed to continuous feeding and/or to feeding at selected intervals during the engine (10) shutdown.

7. System according to any of claims 1 - 6, **characterized in that** the heater (17) has a control for automatically switching the heater on by feedback from at least one temperature measurement sensor arranged in the SCR reactor (16).

8. System according to any of claims 1 - 7, **characterized in that** the SCR reactor (16) and at least part of the exhaust gas duct (11) are located in environment susceptible to humidity and to ambient temperature.

9. System according to any of claims 1 - 8, **characterized in that** the heating system has at least two heaters (17) which are selectively activable.

10. System according to claim 1, **characterized in that** the heater (17) comprises at least one heating cable (22, 23) located at the SCR reactor surface structure or located on at least one end surface of a catalyst element (19) in flow direction of the air.

11. System according to any of claims 1 - 10, **characterized in that** the SCR reactor (16) is insulated by insulation (21).

12. System according to any of claims 1 - 11, **characterized in that** each end of the SCR reactor (16) in flow direction of the air is provided with a closure element (23) in order to maintain heat in the SCR reactor (16) when the heating system has been stopped.

13. Method of catalyst frost protection of selective catalytic reduction of engine (10) whereby in the method when the engine (10) is not running catalyst elements (19) of a selective catalytic reduction reactor (16) are heated by heater (17) and kept in temperatures above 0 °C in case of ambient temperature being below 0 °C, and a compressed air is provided to the SCR reactor (16) from a compressed air supply (12) to ensure sufficient heat convection.

14. Method according to claim 13, **characterized in that** in the method when engine (10) is stopped for a period and due to low ambient air temperature the catalyst elements (19) would cool down close to 0°C, the catalyst elements (19) are heated by an electrical heater (17) and heat convection through the catalyst elements (19) is ensured by pushing air from a compressed air supply (12) by an urea injector (13).

## Patentansprüche

1. System zum Katalysatorfrostschutz einer selektiven katalytischen Reduktion, wobei das System einen Motor (10), eine Abgasleitung (11), die vom Motor (10) nach außen führt, wobei sich am Verlauf der Abgasleitung (11) ein Katalysatorelemente (19) umfassender Reaktor (16) für selektive katalytische Reduktion (SCR) befindet, und ein Heizsystem des Systems für selektive katalytische Reduktion (SCR) umfasst, das eine über einen Luftkanal (18) mit der Abgasleitung (11) verbundene Druckluftversorgung (12, 24) zum Zuführen der Druckluft über die Abgasleitung (11) an den SCR-Reaktor (16) sowie mindestens eine Heizvorrichtung (17) zum Warmhalten und/oder Erwärmen von Katalysatorelementen (19) des SCR-Reaktors (16) umfasst, **dadurch gekennzeichnet, dass** das System eine Steuerung zum Aktivieren der den Reaktor (16) für selektive katalytische Reduktion heizenden Heizvorrichtung (17) und auch zum Aktivieren der Druckluftversorgung (12, 24) umfasst, um eine ausreichende Wärmekonvektion sicherzustellen, um im Falle einer Umgebungstemperatur von unter 0 °C bei nicht laufendem Motor (10) den Reaktor (16) für selektive katalytische Reduktion auf Temperaturen über 0 °C zu halten.

2. System nach Anspruch 1, **dadurch gekennzeichnet, dass** sich am Verlauf des Luftstroms stromaufwärts mindestens eines der Katalysatorelemente des SCR-Reaktors (16) mindestens eine Heizvorrichtung (17) zum Heizen des Luftstroms befindet.

3. System nach Anspruch 1 oder 2, **dadurch gekennzeichnet, dass** das System einen Verbindungspunkt (14) des Luftkanals (18) der Druckluftversorgung (12) mit der Abgasleitung (11) umfasst, der sich stromaufwärts der Katalysatorelemente (19) des SCR-Reaktors (16) befindet.

4. System nach einem der Ansprüche 1 bis 3, **dadurch gekennzeichnet, dass** das System ferner eine Reduktionsmittel-Einspritzdüse (13) zum Zuführen von Druckluft aus der Druckluftversorgung (12) an die Abgasleitung (11) umfasst.

5. System nach einem der Ansprüche 1 bis 4, **dadurch gekennzeichnet, dass** der Druck des Luftstroms für die Heizvorrichtung beim Zuführen an den Kanal 0,5 bis 4 bar beträgt.

6. System nach einem der Ansprüche 1 bis 5, **dadurch gekennzeichnet, dass** die Druckluftversorgung (12) Mittel zum Steuern der Druckluftzufuhr auf kontinuierliches Zuführen und/oder Zuführen in ausgewählten Abständen während des Abschaltens des Motors (10) aufweist.

7. System nach einem der Ansprüche 1 bis 6, **dadurch gekennzeichnet, dass** die Heizvorrichtung (17) eine Steuerung zum automatischen Einschalten der Heizvorrichtung durch Rückkopplung von mindestens einem im SCR-Reaktor (16) angeordneten Temperaturmesssensor aufweist.

8. System nach einem der Ansprüche 1 bis 7, **dadurch gekennzeichnet, dass** sich der SCR-Reaktor (16) und zumindest ein Teil der Abgasleitung (11) in einer gegenüber Feuchtigkeit und Umgebungstemperatur empfindlichen Umgebung befinden.

9. System nach einem der Ansprüche 1 bis 8, **dadurch gekennzeichnet, dass** das Heizsystem mindestens zwei Heizvorrichtungen (17) aufweist, die selektiv aktivierbar sind.

10. System nach Anspruch 1, **dadurch gekennzeichnet, dass** die Heizvorrichtung (17) mindestens ein Heizkabel (22, 23) umfasst, das sich an der Oberflächenstruktur des SCR-Reaktors oder auf mindestens einer Stirnfläche eines Katalysatorelements (19) in Strömungsrichtung der Luft befindet.

11. System nach einem der Ansprüche 1 bis 10, **dadurch gekennzeichnet, dass** der SCR-Reaktor (16) durch eine Isolierung (21) isoliert ist.

12. System nach einem der Ansprüche 1 bis 11, **dadurch gekennzeichnet, dass** jedes Ende des SCR-Reaktors (16) in Strömungsrichtung der Luft mit einem Schließelement (23) versehen ist, um Wärme im SCR-Reaktor (16) zu erhalten, wenn das Heizsystem gestoppt wurde.

13. Verfahren zum Katalysatorfrostschutz einer selektiven katalytischen Reduktion eines Motors (10), wodurch in dem Verfahren im Falle einer Umgebungstemperatur von unter 0 °C bei nicht laufendem Motor (10) Katalysatorelemente (19) eines Reaktors (16) für selektive katalytische Reduktion durch eine Heizvorrichtung (17) aufgeheizt und auf Temperaturen über 0 °C gehalten werden und dem SCR-Reaktor (16) Druckluft aus einer Druckluftversorgung (12) zur Verfügung gestellt wird, um eine ausreichende Wärmekonvektion sicherzustellen.

14. Verfahren nach Anspruch 13, **dadurch gekennzeichnet, dass** in dem Verfahren, wenn der Motor (10) für eine Zeitdauer gestoppt wird und aufgrund geringer Umgebungstemperatur die Katalysatorelemente (19) bis auf nahe 0 °C abkühlen würden, die Katalysatorelemente (19) durch eine elektrische Heizvorrichtung (17) aufgeheizt werden und durch Ausstoßen von Luft aus einer Druckluftversorgung (12) durch eine Harnstoffeinspritzdüse (13) eine Wärmekonvektion durch die Katalysatorelemente (19) sichergestellt wird.

## Revendications

1. Système de protection contre le gel d'un catalyseur à réduction catalytique sélective, ledit système comprenant un moteur (10), un conduit de gaz d'échappement (11) menant du moteur (10) vers l'extérieur, un réacteur (16) de réduction catalytique sélective (SCR) comprenant des éléments catalytiques (19) situé sur le trajet du conduit de gaz d'échappement (11), un système de chauffage du système de réduction catalytique sélective (SCR), lequel comprend une alimentation en air comprimé (12, 24) raccordé au conduit de gaz d'échappement (11) par le biais d'un canal d'air (18) pour introduire l'air comprimé par le biais du conduit de gaz d'échappement (11) dans le réacteur SCR (16) et au moins un dispositif de chauffage (17) destiné à maintenir au chaud et/ou à chauffer des éléments catalytiques (19) du réacteur SCR (16), **caractérisé en ce que** le système comprend une commande pour l'activation du dispositif de chauffage (17) chauffant le réaction de réduction catalytique sélective (16) et également pour l'activation de l'alimentation en air comprimé (12, 24) en vue d'assurer une convection thermique suffisante pour maintenir le réaction de réduction catalytique sélective (16) à des températures supérieures à 0°C lorsque la température ambiante est inférieure à 0°C, lorsque le moteur (10) n'est pas en marche.

2. Système selon la revendication 1, **caractérisé en ce qu'**au moins un dispositif de chauffage (17) est situé sur le trajet du flux d'air en amont de l'un au moins des éléments catalytiques du réacteur SCR (16) pour chauffer le flux d'air.

3. Système selon la revendication 1 ou 2, **caractérisé en ce que** le système comprend un point de raccordement (14) du canal d'air (18) de l'alimentation en air comprimé (12) vers le conduit de gaz d'échappement (11) situé en amont des éléments catalytiques (19) du réacteur SCR (16).

4. Système selon l'une quelconque des revendications 1 à 3, **caractérisé en ce que** le système comprend en outre un injecteur de réducteur (13) destiné à introduire de l'air comprimé à partir de l'alimentation en air comprimé (12) dans le conduit de gaz d'échappement (11).

5. Système selon l'une quelconque des revendications 1 à 4, **caractérisé en ce que** la pression du flux d'air pour le dispositif de chauffage lorsque celuici est introduit dans le canal est de 0,5 à 4 bar.

6. Système selon l'une quelconque des revendications 1 à 5, **caractérisé en ce que** l'alimentation en air comprimé (12) possède un moyen pour commander l'alimentation en air comprimé en vue d'une alimentation continue et/ou d'une alimentation selon des intervalles sélectionnés pendant l'arrêt du moteur (10).

7. Système selon l'une quelconque des revendications 1 à 6, **caractérisé en ce que** le dispositif de chauffage (17) possède une commande pour l'allumage automatique du dispositif de chauffage par rétroaction à partir d'au moins un capteur de mesure de température disposé dans le réacteur SCR (16).

8. Système selon l'une quelconque des revendications 1 à 7, **caractérisé en ce que** le réacteur SCR (16) et au moins une partie du conduit de gaz d'échappement (11) se trouvent dans un environnement exposé à l'humidité et à la température ambiante.

9. Système selon l'une quelconque des revendications 1 à 8, **caractérisé en ce que** le système de chauffage possède au moins deux dispositifs de chauffage (17) aptes à être activés sélectivement.

10. Système selon la revendication 1, **caractérisé en ce que** le dispositif de chauffage (17) comprend au moins un câble chauffant (22, 23) situé au niveau de la structure de surface du réacteur SCR ou sur au moins une surface d'extrémité d'un élément catalytique (19) dans la direction d'écoulement de l'air.

11. Système selon l'une quelconque des revendications 1 à 10, **caractérisé en ce que** le réacteur SCR (16) est isolé par une isolation (21).

12. Système selon l'une quelconque des revendications 1 à 11, **caractérisé en ce que** chaque extrémité du réacteur SCR (16) dans la direction d'écoulement de l'air est pourvue d'un élément de fermeture (23) pour maintenir la chaleur dans le réacteur SCR (16) lorsque le système de chauffage a été arrêté.

13. Procédé pour la protection contre le gel d'un catalyseur à réduction catalytique sélective d'un moteur (10), dans lequel, lorsque le moteur (10) n'est pas en marche, des éléments catalytiques (19) d'un réaction de réduction catalytique sélective (16) sont chauffés par un dispositif de chauffage (17) et maintenus à des températures supérieures à 0°C lorsque la température ambiante est inférieure à 0°C, et de l'air comprimé est introduit dans le réacteur SCR (16) à partir d'une alimentation en air comprimé (12) pour assurer une convection de chaleur suffisante.

14. Procédé selon la revendication 13, **caractérisé en ce que** dans le procédé, lorsque le moteur (10) est arrêté pour une période et qu'en raison d'une température d'air ambiante basse, les éléments catalytiques (19) sont susceptibles de se refroidir autour de 0°C, les éléments catalytiques (19) sont chauffés par un dispositif de chauffage électrique (17) et une convection de chaleur à travers les éléments catalytiques (19) est assurée par une poussée d'air à partir d'une alimentation en air comprimé (12) au moyen d'un injecteur d'urée (13).
